# EUROPEAN PATENT SPECIFICATION

(11) **EP 1 603 263 B1**
(45) Date of publication and mention of the grant of the patent: **31.10.2007**
(21) Application number: 04291411.9
(22) Date of filing: 02.06.2004
(51) Int. Cl.: H04L 1/00, H04N 5/44

(54) **Wireless mobile device**
Mobilfunkkommunikationsgerät
Dispositif mobile sans fil

(43) Date of publication of application: 07.12.2005
(73) Proprietor: Freescale Semiconductor Inc., Austin, TX 78735 (US); Dibcom, 91120 Palaiseau (FR)
(72) Inventor: Volker, Wahl, 31000 Toulouse (FR); Hilkens, Edwin, 31100 Toulouse (FR); Demarchi, Stephane, 75015 Paris (FR); Khaled, Maalej, 75008 Paris (FR); Sibers, Jean-Philippe, 75013 Paris (FR)
(74) Representative: Harrison, Christopher John

(56) References cited:
- WO-A-01/17147
- KWENTUS A Y ET AL: "A SINGLE-CHIP UNIVERSAL DIGITAL SATELLITE RECEIVER WITH 480-MHZ IF INPUT" IEEE JOURNAL OF SOLID-STATE CIRCUITS, IEEE INC. NEW YORK, US, vol. 34, no. 11, November 1999 (1999-11), pages 1634-1646, XP000931891 ISSN: 0018-9200
- VARADA S ET AL: "Data and buffer management in ATM systems" LOCAL COMPUTER NETWORKS, 1998. LCN '98. PROCEEDINGS., 23RD ANNUAL CONFERENCE ON LOWELL, MA, USA 11-14 OCT. 1998, LOS ALAMITOS, CA, USA,IEEE COMPUT. SOC, US, 11 October 1998 (1998-10-11), pages 353-361, XP010310366 ISBN: 0-8186-8810-6
- PATENT ABSTRACTS OF JAPAN vol. 2002, no. 04, 4 August 2002 (2002-08-04) & JP 2001 339676 A (MITSUBISHI ELECTRIC CORP), 7 December 2001 (2001-12-07)

## Description

### Field of the Invention

The present invention relates to a wireless mobile device and a method for error correcting within a wireless device.

### Background of the Invention

One digital video broadcasting standard that has been developed for TV sets and set-top boxes is the digital video broadcasting - terrestrial standard DVB-T.

A recent variation of the DVB-T standard that has been adopted to incorporate enhanced features to allow improved reception of digital video broadcasting services for mobile devices is the digital video broadcasting - handset DVB-H standard. One feature that has been incorporated within the DVB-H standard that facilitates this aim is the use of multi protocol encapsulated - forward error correction MPE-FEC. MPE-FEC allows recovery of data by a receiver in situations of high packet loss, which can occur when a receiver is in a changing environment, for example when a receiver is moving.

Associated with the use of MPE-FEC within a DVB-H system, however, is the need for a receiving device to be able to receive relatively large data frames, where each data frame corresponds to a MPE-FEC frame, to be able to perform interleaving of the data, Reed-Solomon error correction and associated deinterleaving of the data.

For example, a receiver operating within a DVB-H compatible system could receive MPE-FEC frames of up to 2Mbit (i.e. 250kbytes) of data from a single channel over a relatively short time period, for example 200 millisecond. If a multi service environment existed additional channels may be required.

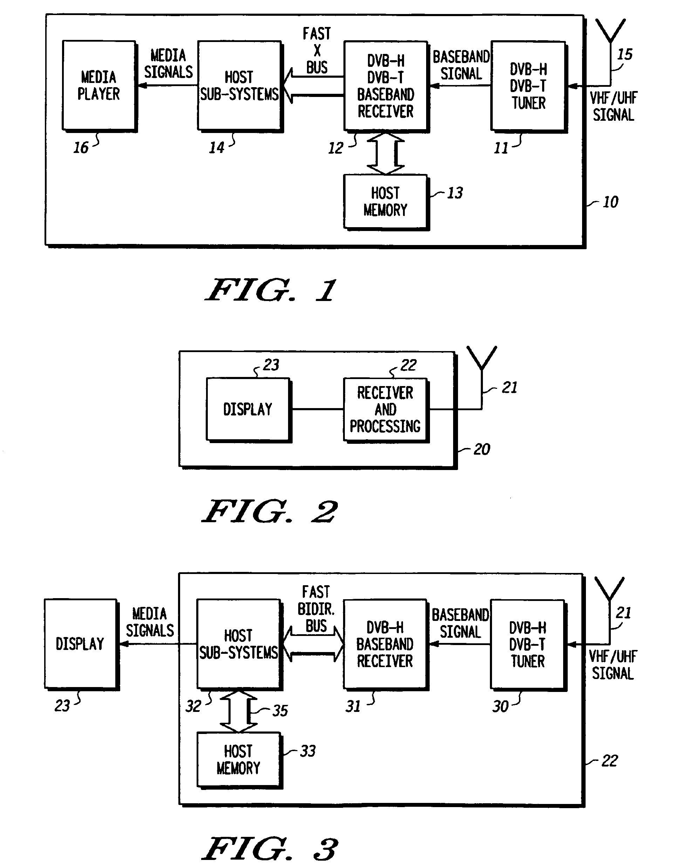

Figure 1 illustrates a typical DVB-H compliant wireless mobile device 10 having a tuner 11 arranged to receive a radio frequency signal, for example a VHF or UHF signal, via an antenna 15 which is down converted to a base band signal or intermediate frequency IF signal and provided to a base band receiver 12. The receiver 12 is arranged to recover a MPEG-2 transport stream from the received data, which involves storing a received MPE-FEC frame in a memory module 13 coupled to the receiver 12, and for the receiver 12 to extract interleaved data words from the memory 13 and performing Reed-Solomon error correction on the data, where typically the receiver 12 will be a dedicated hardware module/chip (e.g. an ASIC) to achieve the processing speed required to perform the error correction. The error corrected data words are then placed back into the respective MPE-FEC frame in the memory module 13, the recovered MPEG-2 data stream is then passed to the wireless device's application processor 14, which is formed on a separate chip to that of the receiver 12, which demultiplexes and decodes the MPEG-2 transport stream and transfers the recovered data via the processor's 14 internet protocol stack to the application software, for example a media player 16.

The paper "A single-chip Universal Digital Satellite Receiver with 480-MHz IF Input", by Kwentus et al; shows a prior art DBS receiver with on-chip deinterleaving RAM.

However, this implementation results in additional memory being required by the receiver to store the received data burst, which can result in an increase in power consumption, an increase in cost and an increase in size of the mobile device.

It is desirable to improve this situation.

### Statement of Invention

In accordance with a first aspect of the present invention there is provided a wireless mobile device in accordance with claim 1.

This provides the advantage of allowing memory associated with an application processor incorporated within the mobile device to be used to store received data prior to error correction being performed, thereby minimising the need for additional memory associated with a base band receiver.

In accordance with a second aspect of the present invention there is provided a method for error correcting interleaved data received by a wireless mobile device in accordance with claim 15.

### Brief Description of the Drawings

The present invention will now be described, by way of example, with reference to the accompanying drawings, in which:
Figure 1 illustrates a prior art DVB-H compliant wireless mobile device;
Figure 2 illustrates a wireless mobile device according to an embodiment of the present invention;
Figure 3 illustrates a receiving and processing section of a wireless mobile device according to an embodiment of the present invention.

### Description of Preferred Embodiments

Figure 2 illustrates a wireless mobile device 20, which, for example, may be a radiotelephone, a personal digital assistant or a laptop computer.

The wireless mobile device 20 includes an antenna 21, for receiving radio frequency RF signals, that is coupled to a receiver and processing card 22. The receiver and processing card 22 is coupled to a display 23. The wireless mobile device 20 additionally includes other features common to the type of wireless mobile device being used, for example a keypad (not shown) and a speaker (not shown), as is well known to a person skilled in the art, and will not be discussed further within this embodiment.

Figure 3 illustrates the receiver and processing card 22 coupled to the antenna 21 and the display 23. The receiver and processing card 22 has a tuner 30, a base band receiver 31, an application processor 32 and a memory module 33, where the base band receiver 31 is a dedicated hardware element, for example an ASIC, and the application processor 32, which is formed on a separate silicon chip to that of the receiver 31, is responsible for handling the interface functions for the user, such as audio data, video data, and graphical and textual information services. The application processor 32 typically operates under instruction from application software code, as is well known to a person skilled in the art.

Although the tuner 30, base band receiver 31, application processor 32 and memory module 33 are located on a single card, for example a printed circuit board PCB, the individual elements can also be located on separate cards. Within this embodiment the tuner 30, base band receiver 31, the memory module 32 and the application processor 32 are formed on separate silicon chips. However, the memory module 32 can also be integrated with the application processor on a single silicon chip.

An input on the tuner 30 is coupled to the antenna 21 for receiving radio frequency signals, for example VHF and UHF transmission signals, where the tuner 30 is arranged to tune to a required frequency band. The tuner 30 down coverts a received signal to a base band signal, which is output from an output of the tuner 30 to an input on the base band receiver 31.

A MPE-FEC frame includes MPEG-2 transport stream packets that are modulated onto a carrier frequency band of a radio frequency signal. The MPEG-2 transport stream packets contain data sections that contain in most cases internet protocol IP packets, which in turn may contain compressed video data, compressed audio data or any other data like internet files. The MPEG-2 transport stream packets can also contain meta-information like program contents or other signalling information.

Although within this embodiment the output of the tuner 30 is a base band signal it can also be an intermediate frequency IF signal.

The base band receiver 31 converts the received base band signal into a data stream, which in this embodiment is an MPEG 2 transport stream. Additionally, the base band receiver 31 identifies MPE-FEC frames which contain errors by means of checksum values contained within the data stream, and by means of redundancy built into the data stream on transport layers underlying the MPEG 2 transport stream, and create associated error flags in the form of data elements.

The MPE-FEC frames and associated error flags are output from an output of the base band receiver 31 over a high speed bidirectional bus 34, for example at a bus transfer rate of 30Mbits/sec, to the application processor 32.

The application processor 32 stores the received MPE-FEC frames in the memory 33 associated with the application processor 32, where the memory will typically be coupled to the application processor 32 via a bidirectional bus 35. The memory 33 will typically be the main storage area for the wireless mobile device 20 and will be relatively large in size, for example in the order of 2 to 64Mbytes, to provide storage support for different functions within the wireless mobile device 20.

The application processor 32 checks for error flags generated by the base band receiver 31. When a part of a MPE-FEC frame has an associated error flag the application processor 32 outputs the relevant part of the MPE-FEC frame in interleaved form to the base band receiver 31, via the bidirectional bus 34, to allow the base band receiver 31 to perform MPE-FEC error correction using the Reed Solomon algorithm.

Although in the present embodiment the error detection is performed by the base band receiver 31 the error detection could also be performed by software running on the application processor 32.

Once the base band receiver 31 has completed error correction on the part of the MPE-FEC frame the corrected part of the MPE-FEC frame is output, via the bidirectional bus 34, to the application processor 32, which reinserts the corrected data into the relevant MPE-FEC frame.

Although in the present embodiment the error correction depends upon the presence of error flags, error correction can be performed unconditionally on all parts of a MPE-FEC frame, thus not requiring the generation of any error flags.

Once all the relevant parts of the MPE-FEC frames have been corrected the application processor 32 extracts out from memory 33 in deinterleaved form the MPE-FEC frames. For the purpose of this embodiment the interleaving/deinterleaving technique specified in the DVB-H standard is used, however, other forms of interleaving/deinterleaving could be used.

For the purpose of this embodiment the Reed-Solomon algorithm is used for error correction, however, other forms of error correction could be used.

For the purposes of this embodiment the MPE-FEC frames are stored in deinterleaved form in memory 33, however, they could be stored in interleaved form.

The extracted deinterleaved MPE-FEC frames are converted by the application processor 32 into internet protocol IP packets and input into the IP stack of the application processor software, where user application software such as a media player application, or other information and entertainment applications, running on the application processor retrieves the data stream to allow playback of the received video stream on the display 23.

Although the above embodiment describes error correction being performed by a wireless mobile device on data received within a DVB-H compliant system the above principles could equally be applied to error correction for other data transmission systems.

## Claims

1. A wireless mobile device (20) comprising a base band receiver (31) for providing received data to an application processor (32) for storage in memory (33), wherein the wireless mobile device (20) is **characterised in that** the application processor (32) under instruction from application software code is arranged to provide to the base band receiver (31) the data extracted from the memory (33) in interleaved form wherein the base band receiver (31) performs error correction on the extracted data.

2. A wireless mobile device (20) according to claim 1, wherein the received data is received in data frames for interleaving.

3. A wireless mobile device (20) according to claim 1 or 2, wherein the received data is compliant with the digital video broadcasting handset DVB-H standard.

4. A wireless mobile device (20) according to claim 3, wherein the error correction is multi protocol encapsulation forward error correction MPE-FEC.

5. A wireless mobile device (20) according to claim 4, wherein the error correction is performed using a Reed Solomon algorithm.

6. A wireless mobile device (20) according to claims 4 or 5, wherein the application processor (32) is arranged to identify faulty multi protocol encapsulation forward error correction frames.

7. A wireless mobile device (20) according to claim 6, wherein the application processor (32) is arranged to identify faulty multi protocol encapsulation forward error correction frames by checking for error flags generated by the base band receiver (31).

8. A wireless mobile device (20) according to any preceding claim, wherein the application processor (32) is arranged to provide to the base band receiver (31) interleaved data requiring error correction.

9. A wireless mobile device (20) according to any preceding claim, wherein the base band receiver (31) is arranged to provide error corrected video data to the application processor (32).

10. A wireless mobile device (20) according to any preceding claim, further comprising a tuner (30) for converting a radio frequency signal to a base band signal and providing the base band signal to the base band receiver (31).

11. A wireless mobile device (20) according to any of claims 1 to 9, further comprising a tuner (30) for converting a radio frequency signal to an intermediate frequency signal and providing the intermediate frequency signal to the base band receiver (31).

12. A wireless mobile device (20) according to any preceding claim, wherein the base band receiver (31) is arranged to provide error corrected data to the application processor (32).

13. A wireless mobile device (20) according to any preceding claim, wherein the wireless mobile device (20) is a radiotelephone.

14. A wireless mobile device (20) according to any preceding claim, wherein the wireless mobile device (20) is a personal digital assistant.

15. A method for error correcting data received by a wireless mobile device comprising providing the data from a base band receiver to an application processors operating under instruction from application software code, for storing in memory; extracting the data from the memory; wherein the method is **characterised by** the steps of extracting the data from the memory, providing the extracted data to the base band receiver in interleaved form and error correcting the extracted data by the base band receiver.

## Patentansprüche

1. Drahtlose Mobilfunkvorrichtung (20), die einen Basisbandempfänger (31) zum Bereitstellen von empfangenen Daten an einen Anwendungsprozessor (32) zur Speicherung in einem Speicher (33) umfasst, wobei die drahtlose Mobilfunkvorrichtung (20) **dadurch gekennzeichnet ist, dass** der Anwendungsprozessor (32) unter Anleitung eines Anwendungssoftwarecodes eingerichtet ist, um dem Basisbandempfänger (31) die aus dem Speicher (33) entnommenen Daten in einer verschachtelten Form zur Verfügung zu stellen, wobei der Basisbandempfänger (31) eine Fehlerkorrektur der entnommenen Daten durchführt.

2. Drahtlose Mobilfunkvorrichtung (20) gemäß Anspruch 1, wobei die empfangenen Daten in Datenrahmen zur Verschachtelung empfangen werden.

3. Drahtlose Mobilfunkvorrichtung (20) gemäß Anspruch 1 oder 2, wobei die empfangenen Daten mit dem DVB-H-Standard (DVB-H = digitaler Videorundfunk für Handgeräte) konform sind.

4. Drahtlose Mobilfunkvorrichtung (20) gemäß Anspruch 3, wobei die Fehlerkorrektur eine MPE-FEC (Multi Protocol Encapsulation Forward Error Correction) ist.

5. Drahtlose Mobilfunkvorrichtung (20) gemäß Anspruch 4, wobei die Fehlerkorrektur unter Verwendung eines Reed Solomon-Algorithmus' durchgeführt wird.

6. Drahtlose Mobilfunkvorrichtung (20) gemäß Anspruch 4 oder 5, wobei der Anwendungsprozessor (32) eingerichtet ist, um fehlerhafte MPE-FEC-Rahmen zu identifizieren.

7. Drahtlose Mobilfunkvorrichtung (20) gemäß Anspruch 6, wobei der Anwendungsprozessor (32) eingerichtet ist, um fehlerhafte MPE-FEC-Rahmen durch Prüfen auf durch den Basisbandempfänger (31) erzeugte Fehlerflags zu identifizieren.

8. Drahtlose Mobilfunkvorrichtung (20) gemäß einem der vorherigen Ansprüche, wobei der Anwendungsprozessor (32) eingerichtet ist, um dem Basisbandempfänger (31) verschachtelte Daten zur Verfügung zu stellen, die eine Fehlerkorrektur benötigen.

9. Drahtlose Mobilfunkvorrichtung (20) gemäß einem der vorherigen Ansprüche, wobei der Basisbandempfänger (31) eingerichtet ist, um dem Anwendungsprozessor (32) fehlerkorrigierte Videodaten zur Verfügung zu stellen.

10. Drahtlose Mobilfunkvorrichtung (20) gemäß einem der vorherigen Ansprüche, die weiterhin einen Tuner (30) zum Wandeln eines Radiofrequenzsignals in ein Basisbandsignal zum Bereitstellen des Basisbandsignals an den Basisbandempfänger (31) umfasst.

11. Drahtlose Mobilfunkvorrichtung (20) gemäß einem der Ansprüche 1 bis 9, die weiterhin einen Tuner (30) zum Wandeln eines Radiofrequenzsignals in ein Zwischenfrequenzsignal und zum Bereitstellen des Zwischenfrequenzsignals an den Basisbandempfänger (31) umfasst.

12. Drahtlose Mobilfunkvorrichtung (20) gemäß einem der vorherigen Ansprüche, wobei der Basisbandempfänger (31) eingerichtet ist, um dem Anwendungsprozessor (32) fehlerkorrigierte Daten zur Verfügung zu stellen.

13. Drahtlose Mobilfunkvorrichtung (20) gemäß einem der vorherigen Ansprüche, wobei die drahtlose Mobilfunkvorrichtung (20) ein Funktelefon ist.

14. Drahtlose Mobilfunkvorrichtung (20) gemäß einem der vorherigen Ansprüche, wobei die drahtlose Mobilfunkvorrichtung (20) ein persönlicher digitaler Assistent ist.

15. Verfahren zur Fehlerkorrektur von Daten, die durch eine drahtlose Mobilfunkvorrichtung empfangen werden, das umfasst: Bereitstellen der Daten von einem Basisbandempfänger an einen Anwendungsprozessor, der unter Anleitung eines Anwendungssoftwarecodes arbeitet, zur Speicherung in einem Speicher; Entnehmen der Daten aus dem Speicher; wobei das Verfahren durch die folgenden Schritte **gekennzeichnet** ist: Entnehmen der Daten aus dem Speicher, Bereitstellen der entnommenen Daten an den Basisbandempfänger in einer verschachtelten Form und Fehlerkorrigieren der entnommenen Daten durch den Basisbandempfänger.

## Revendications

1. Dispositif mobile sans fil (20) comprenant un récepteur de bande de base (31) pour appliquer des données reçues sur un processeur d'application (32) pour un stockage dans une mémoire (33), dans lequel le dispositif mobile sans fil (20) est **caractérisé en ce que** le processeur d'application (32), sous une instruction en provenance d'un code de logiciel d'application, est agencé pour appliquer sur le récepteur de bande de base (31) les données qui sont extraites à partir de la mémoire (33) selon une forme entrelacée, où le récepteur de bande de base (31) réalise une correction d'erreur sur les données extraites.

2. Dispositif mobile sans fil (20) selon la revendication 1, dans lequel les données reçues sont reçues selon des trames de données pour un entrelaçage.

3. Dispositif mobile sans fil (20) selon la revendication 1 ou 2, dans lequel les données reçues sont compatibles avec le standard de diffusion vidéo numérique pour combiné DVB-H.

4. Dispositif mobile sans fil (20) selon la revendication 3, dans lequel la correction d'erreur est une correction d'erreur en sens direct à encapsulage multiprotocole MPE-FEC.

5. Dispositif mobile sans fil (20) selon la revendication 4, dans lequel la correction d'erreur est réalisée en utilisant un algorithme de Reed-Solomon.

6. Dispositif mobile sans fil (20) selon la revendication 4 ou 5, dans lequel le processeur d'application (32) est agencé pour identifier des trames de correction d'erreur en sens direct à encapsulage multiprotocole défaillantes.

7. Dispositif mobile sans fil (20) selon la revendication 6, dans lequel le processeur d'application (32) est agencé pour identifier des trames de correction d'erreur en sens direct à encapsulage multiprotocole défaillantes en vérifiant des indicateurs d'erreur générés par le récepteur de bande de base (31).

8. Dispositif mobile sans fil (20) selon l'une quelconque des revendications précédentes, dans lequel le processeur d'application (32) est agencé pour appliquer sur le récepteur de bande de base (31) des données entrelacées nécessitant une correction d'erreur.

9. Dispositif mobile sans fil (20) selon l'une quelconque des revendications précédentes, dans lequel le récepteur de bande de base (31) est agencé pour appliquer des données vidéo à erreurs corrigées sur le processeur d'application (32).

10. Dispositif mobile sans fil (20) selon l'une quelconque des revendications précédentes, comprenant en outre un tuner (30) pour convertir un signal de fréquence radio selon un signal de bande de base et pour appliquer le signal de bande de base sur le récepteur de bande de base (31).

11. Dispositif mobile sans fil (20) selon l'une quelconque des revendications 1 à 9, comprenant en outre un tuner (30) pour convertir un signal de fréquence radio selon un signal de fréquence intermédiaire et pour appliquer le signal de fréquence intermédiaire sur le récepteur de bande de base (31).

12. Dispositif mobile sans fil (20) selon l'une quelconque des revendications précédentes, dans lequel le récepteur de bande de base (31) est agencé pour appliquer des données à erreurs corrigées sur le processeur d'application (32).

13. Dispositif mobile sans fil (20) selon l'une quelconque des revendications précédentes, dans lequel le dispositif mobile sans fil (20) est un radiotéléphone.

14. Dispositif mobile sans fil (20) selon l'une quelconque des revendications précédentes, dans lequel le dispositif mobile sans fil (20) est un assistant numérique personnel.

15. Procédé pour corriger en termes d'erreurs des données qui sont reçues par un dispositif mobile sans fil, comprenant l'application des données depuis un récepteur de bande de base sur un processeur d'application qui fonctionne sous une instruction en provenance d'un code de logiciel d'application, pour un stockage dans une mémoire ; l'extraction des données à partir de la mémoire ; dans lequel le procédé est **caractérisé par** les étapes d'extraction des données à partir de la mémoire, d'application des données extraites sur le récepteur de bande de base selon une forme entrelacée et de correction en termes d'erreurs des données extraites au moyen du récepteur de bande de base.
